# EUROPEAN PATENT SPECIFICATION

(11) **EP 1 159 597 B1**
(45) Date of publication and mention of the grant of the patent: **08.08.2007**
(21) Application number: 00908124.1
(22) Date of filing: 03.03.2000
(51) Int. Cl.: G01N 1/34

(54) **SOLID PHASE EXTRACTION INSTRUMENT AND METHOD FOR SOLID PHASE EXTRACTION**
FESTPHASENEXTRAKTIONS-VORRICHTUNG UND -VERFAHREN
INSTRUMENT D'EXTRACTION EN PHASE SOLIDE ET PROCEDE D'EXTRACTION EN PHASE SOLIDE

(30) Priority: 05.03.1999 NL 1011475; 28.04.1999 NL 1011924
(43) Date of publication of application: 05.12.2001
(73) Proprietor: Spark Holland B.V., 7800 AJ Emmen (NL)
(72) Inventor: HAAK, Gerhardus, Sjoerd, Jozef, NL-7812 LV Emmen (NL); OOMS, Jan, Albert, NL-7827 JX Emmen (NL); HIDDING, Johannes, Hendrik, NL-7855 PN Meppen (NL); HALMINGH, Otto, NL-7873 CC Odoorn (NL)
(74) Representative: Winckels, Johannes Hubertus F.
(86) International application number: PCT/NL2000/000141
(87) International publication number: WO 2000/054023

(56) References cited:
- US-A- 5 260 028
- US-A- 5 512 168
- US-A- 5 560 792
- ZHOUYAO ZHANG ET AL: "QUANTITATIVE EXTRACTION USING AN INTERNALLY COOLED SOLID PHASE MICROEXTRACTION DEVICE" ANALYTICAL CHEMISTRY, vol. 67, no. 1, 1 January 1995 (1995-01-01), pages 34-43, XP000482593 ISSN: 0003-2700

## Description

The present application and the aspects of the invention relate to the field of solid phase extraction and in particular to solid phase extraction as preparation for an analytical process. As preparation for an analytical process, solid phase extraction is used to prepare a sample.

Solid phase extraction (SPE) in general comprises one or more of the following steps:
a) conditioning a sorbent in a cartridge, a liquid suitable for conditioning being passed through the cartridge;
b) applying a sample that contains the analyte to the sorbent, a liquid which contains the sample being passed through the cartridge;
c) washing the sorbent, a wash liquid being passed through the cartridge;
d) eluting the analyte from the sorbent, an elution liquid being passed through the cartridge.

Step a) serves to wet the surface of the sorbent to create a phase that is easily able to absorb the analyte. In step b) the substance to be tested, the analyte, is applied to the sorbent. In step c) the sorbent is washed so that constituents which could interfere with detection of the analyte are removed. In step d) the analyte is eluted from the sorbent so that it can be detected in a following step, for example by gas chromatographic analysis (GC) or by means of liquid chromatography (HPLC).

It will be clear that such a process will not necessarily always include all these steps and that it can also be employed in a context other than for preparation for an analytical process.

According to a first aspect of the invention, the present invention relates to an SPE process comprising the following steps:
a) conditioning a sorbent in a cartridge by passing a liquid suitable for conditioning through the cartridge;
b) applying a sample that contains the analyte to the sorbent by passing a liquid which contains the sample through the cartridge;
c) washing the sorbent by passing a wash liquid through the cartridge;
d) eluting the analyte from the sorbent by passing, an elution liquid through the cartridge,
characterised in that the temperature of the cartridge is raised or lowered to a predetermined value during one or more of the steps a) to d).

By means of the temperature control according to the invention, the entire SPE procedure can be carried out at a constant temperature. This temperature will in general be between ambient temperature and 120°C. By means of this temperature control it is possible, inter alia, to achieve a reduction in the solvent use and a reduction in the processing time.

The invention comprises more particularly control of the temperature of the cartridge by heating or cooling one or more of the liquids used in step a) to d) before feeding to the cartridge and passing through it. Preferably, the temperature control is used with the liquid for conditioning of the sorbent and/or the liquid which contains the sample and/or the wash liquid and/or the elution liquid.

Apart from controlling the temperature of the liquid, it would also be possible to control the temperature of the cartridge itself. However, controlling the temperature of the liquid is preferred since this offers various advantages. One of the advantages is that a change in temperature can take place relatively rapidly, both when heating the liquid is concerned and when cooling has to be carried out between two steps. Another advantage is that the heating means can be constructed with a relatively small volume, for example in the form of a spiral wound line, as will be explained later.

When the elution liquid is heated prior to feeding it to the cartridge the desorption of the analyte will be accelerated, as a result of which it is desorbed into a smaller volume. The smaller the volume of liquid in which the analyte is flushed from the cartridge to the analytical system, the more sensitive and more selective is the subsequent analysis.

Control of the temperature also has an effect on the extraction efficiency (recovery). Temperature changes have an influence on the breakthrough volume and thus on the recovery, especially if this is much lower than 100%. A constant temperature will thus increase the precision and reproducibility of the extraction. The greater the effect, the more important is it that the temperature is kept constant.

The temperature is also of importance when conditioning the sorbent. An example of a system of conditioning liquids with which temperature control can be advantageous is the system where the sorbent is first "activated" with methanol or acetonitrile and is then equilibrated with water. Because hot water has a higher dissolving power, hot water can be used both for activation and for equilibration with some sorbents. This yields appreciable savings in materials.

Elevated temperature lowers the viscosity of liquids. The backpressure when pumping liquid through the SPE cartridge will decrease as a result. This is important especially when using cartridges containing small sorbent particles (< 10 µm). Smaller particles are preferred because these give more efficient desorption. Raising the temperature of the liquid makes it possible to use these small particles without loss in liquid flow rate occurring.

Lowering the viscosity of liquids is also important in the case of highly viscous samples. For serum and plasma samples it is frequently impossible to load the cartridge at high speed because the interaction with the sorbent is so impeded by the sample matrix that at high speed the residence time in the cartridge is simply too short for 100% exchange. Elevated temperature increases the rate of exchange so that a higher loading rate is possible, especially for cartridges containing relatively large particles.

Because raising the temperature during loading and subsequent washing steps will have a different effect for different types of compounds, it will be the case for some analytes that raising the temperature selectively increases the extraction efficiency in respect of (a number of) matrix components, as a result of which a cleaner extract can be obtained by means of washing steps. Some interfering components are also removed more selectively at higher temperature.

The invention also relates to an SPE process that also comprises the step of drying the cartridge, before or after one or more of the steps a) to d), drying being carried out by passing a suitable gas through the cartridge, characterised in that the gas is heated prior to feeding to the cartridge. By heating these gases it will also be possible more easily to remove residual amounts of the solvent, for example water, that is still present on the cartridge. A saving in time can be obtained as a result. This system also makes it possible to use liquids which are not miscible with one another, in two successive steps.

According of the invention, an SPE instrument is also provided that is suitable for application of the SPE process with temperature control which has been described above. This SPE instrument comprises
- at least one line system for transporting a liquid;
- a cartridge exchanging system having at least one cartridge holder 3 for holding A CARTRIDGE 11 incorporated in the line system;
- a sample feed device 41 connected to the line system;
- a solvent feed device 40 connected to the line system, .
wherein the sample feed device 41 and the solvent feed device 40 are connected by the line system to the cartridge holder 3 such that a liquid can be transported from the sample feed device 41 or the solvent device 40 to the cartridge holder 3 and can pass through the cartridge 11,
characterised in that
the line system is provided with heating and/or cooling means 73 such that the liquid issuing from the sample feed device 41 or the solvent feed device 40 flows successively through the heating and/or cooling means 73 and the at least one cartridge holder 3.

In practice the line system will usually contain at least one valve, such as a so-called multi-way valve.

The heating and/or cooling means are preferably so designed that they have a heating capacity which is sufficient to be able to heat up from 20°C to 100°C with a flow of 1 ml/min of liquid in 10 seconds or less, preferably in 5 seconds or less. This results in it being possible to change the temperature during steps a), b), c) and d) of the solid phase extraction process at a rate which is higher than. 5°C/min. Preferably this rate is higher than 50°C/min.

According to the invention, the heating and/or cooling means advantageously comprise a spirally wound line which is incorporated in the line system and through which liquid/gas to be heated is passed and a heating and/or cooling element, preferably located in the spiral, that is connected to a/the control system for control.

The SPE instrument described above preferably also comprises a control system that is equipped to be able to control the heating and/or cooling means. Means for determining the temperature are also arranged on the line system at the location of the heating and/or cooling means, which means are connected to the control system.

For heating gases for drying the cartridge, the line system is provided with a gas connection and valve means to connect the gas connection, viewed in the direction of flow, to the heating and/or cooling means and the at least one cartridge holder.

AN SPE instrument comprising:
- at least one line system for transporting a liquid;
- a cartridge exchanging system having at least one cartridge holder incorporated in the line system;
- a sample feed device connected to the line system;
- a solvent feed device connected to the line system; and a control system is known. Reference can be made to, for example, the Prospekt I marketed by the applicant Spark Holland B.V. and the OSP-2 system from Merck-Hitachi.

The applicant's Prospekt I essentially consists of a so-called autosampler, for feeding sample into the SPE instrument, a solvent delivery unit, by means of which conditioning, washing and eluting solvents can be fed into the SPE instrument, and a cartridge exchanging system. A single cartridge holder in the form of a cartridge clamp is incorporated in the line system, the cartridge magazine consists of a row with one row of cartridges arranged therein and the cartridge exchanging system is capable only of working through the row of cartridges in the cartridge magazine one by one by taking the cartridges one by one from the row, working from the start of the row to the end of the row, placing the cartridge in the cartridge holder and, after use, removing it from the cartridge holder again and returning it to its original position in the cartridge magazine and then taking the next cartridge from the row from the cartridge magazine, placing it in the cartridge holder and, after use, returning it to the cartridge magazine, etc. until the entire row of cartridges from the cartridge magazine has been worked through in this way.

The OSP-2 system from Merck-Hitachi has a cartridge magazine in the form of a carousel. The cartridges are placed in this in a single circular row. The carousel can be turned to place two cartridges to be used in position in front of the cartridge exchanging system. The two cartridges to be used, which are located alongside one another in the circular row, are placed simultaneously in two cartridge holders, incorporated in line systems, for subjection to one or more process steps. In the one cartridge clamp the cartridge is subjected to the application step and the washing step and in the other cartridge clamp the cartridge is subjected to the elution step.

Both systems have the disadvantage that they have to work through the cartridges in an order which is determined by the order in which the cartridges have been placed in the cartridge magazine. This means that both instruments, that is to say the OSP-2 and the Prospckt I, are only suitable for carrying out a predetermined series of SPE processes. As such, these instruments are thus suitable for a large number of applications, especially when the SPE processes to be carried out are already known well in advance, so that the cartridge magazines can be filled in advance with the correct cartridges, which, moreover, have to be placed in a correct predetermined order. However, these known SPE instruments are inadequate as soon as the SPE process to be carried out or the SPE processes to be carried out is/are not known in advance. These instruments are therefore unsuitable for designing new SPE processes. Furthermore, these instruments are not suitable, or at least not very suitable, for preparing samples for refined analyses, for example analyses where a further analysis has to be carried out depending on the result of a previous analysis, such as iterative analytical processes.

According to invention, an additional object of the present invention provide a flexible SPE instrument which, as far as the SPE processes to be carried out are concerned, is independent of the order in which the cartridges have been placed in the cartridge magazine. The object of the additional aspect of the invention is to provide an SPE instrument that is suitable for designing an SPE process and/or for use prior to more refined or iterative analytical processes.

The abovementioned objects are achieved according to the invention with an SPE instrument according to any one of claims 8-10 comprising:
- at least one line system for transporting a liquid;
- a cartridge exchanging system having at least one cartridge holder incorporated in the line system (the clamps 1 and 2, not the grippers for moving);
- a sample feed device connected to the line system;
- a solvent feed device connected to the line system; and
- a control system.

By providing the SPE instrument with input means via which a command can be given to the control system and equipping the control system to determine one of the multiplicity of cartridge locations depending on that command and then to control the transport system to remove a cartridge from that specific cartridge location and/or to place a cartridge in that specific cartridge location, the system becomes very flexible, it becomes possible to use a cartridge magazine containing cartridges of different types therein, preferably a number of cartridges of each type, and the SPE instrument can be controlled efficiently for an SPE process possibly specified at the last minute, just before the SPE process to be carried out. With this arrangement each cartridge location of the multiplicity of cartridge locations can have been filled with a cartridge type known per se in advance, but it is also very readily possible to fill the cartridge locations with cartridge types not known in advance. Identification means readable by the control system can optionally have been provided by the cartridge magazine, or possible even firmly attached thereto, via which identification means the control system can then be informed about the type of cartridge in each cartridge location. Optionally it is also conceivable to provide each cartridge itself with its own identification and to equip the SPE instrument with a scanner which is then able to scan all cartridges in order to provide the control system with information on the type of cartridge in each cartridge location.

So as to be able to increase the flexibility of the SPE instrument according to the invention and the number of SPE processes that can be carried out therewith per unit time, it is advantageous according to the invention if the cartridge exchanging system comprises two of said cartridge holders incorporated in the line system and if the transport system comprises preferably two cartridge grippers for picking up, moving and setting down cartridges, which cartridge grippers can be controlled essentially independently of one another by the control system. Such an embodiment offers a wide range of possibilities. For instance, with this embodiment, it is possible, inter alia, to:
- carry out two SPE processes simultaneously; and/or
- simultaneously carry out different steps of different SPE processes, so that, for example, while carrying out an earlier SPE process preparations for the next SPE process can already be made by already carrying out part of the next SPE process.

The input means can optionally receive their commands completely automatically, for example by feedback from another process, such as an analytical process, but highly advantageously can also be operated manually. In the case of input means that can be operated manually, a wide variety of input means are conceivable, such as the keyboard of a computer with associated monitor for checking the input, selector knobs, selection buttons, a mouse in combination with a monitor, etc.

To increase the flexibility and the number of operations that can be carried out per unit time it is advantageous according to the invention if, the control system is equipped to control the transport system to move a cartridge between a cartridge location and a cartridge holder, or vice versa, and/or between two cartridge holders.

An SPE instrument that functions reliably, rapidly and flexibly is obtained when the transport system comprises a guide bridge with one or more cartridge grippers mounted thereon and movable along said guide, when the guide bridge is mounted above the cartridge magazine, or the cartridge magazine holder, and when the guide bridge and the cartridge magazine, or the cartridge magazine holder, arc movable relative to one another in a direction essentially transverse to the longitudinal direction of the guide bridge. In this way a system is obtained which has cartridge grippers which are movable in two orthogonal directions with respect to a cartridge magazine under the control of the control system. A cartridge gripper is thus able to reach any arbitrary cartridge location in a cartridge magazine. According to one aspect of the invention, the flexibility and work rate of such an SPE instrument can in particular be further improved if this instrument comprises at least two cartridge magazines, or cartridge magazine holders, which are positioned alongside one another viewed in the longitudinal direction of the guide bridge and if said cartridge magazines, or cartridge magazine holders, are movable relative to one another in the transverse direction of the guide bridge, if the control system is equipped to move said cartridge magazines, or cartridge magazine holders, relative to one another and if, preferably, at least one cartridge gripper is provided per cartridge magazine. In this way it becomes possible in the case of multiple cartridge magazines, which in general are identical to one another, simultaneously to remove a cartridge from, or place a cartridge in, very diverse cartridge locations in each cartridge magazine, or at least to pre-position another cartridge magazine in its correct position while the gripper is removing a cartridge from, or placing a cartridge in, one cartridge magazine.

In order, in particular, also to make the SPE instrument according to the invention flexible for user wishes which arise more or less instantaneously, it is in particular advantageous according to the invention if the input means are equipped for entering an operator's choice for a specific SPE process and if the control system is equipped to select the type of cartridge belonging to that specific SPE process; and/or if the input means are equipped to enter an operator's choice for a specific type of cartridge; wherein the control system is equipped to determine the specific cartridge location which contains an unused cartridge of the selected or specified type of cartridge.

Not only an increase in the flexibility but also in the capacity of an SPE instrument according to the application, can in particular advantageously be achieved with an embodiment wherein the at least one line system contains at least two multi-way valves which are functionally connected to the control system for operation, and which embodiment comprises at least two cartridge holders, if the control system is equipped to:
a) switch two cartridge holders in series (that is to say in mutual liquid communication); and/or
b) to switch the one cartridge holder in liquid communication with a solvent feed device located upstream thereof and to be able to switch the other cartridge holder in simultaneous liquid communication with the sample feed device located upstream thereof; and/or
c) to switch the one and the other cartridge holder each in mutual simultaneous liquid communication with a solvent feed device and/or a sample feed device. Such an SPE instrument, makes very flexible control possible, which is very highly advantageous when designing new SPE processes/methods. Moreover, such flexible control makes time optimisation of very diverse SPE processes, which are to be carried out successively or partially simultaneously, possible. To this end the control system can advantageously be provided with a process optimisation module which is capable of determining an optimum sequence of processing steps and/or solid phase extraction processes to be carried out.

An SPE instrument comprising
- at least one line system for transporting a liquid;
- a cartridge exchanging system having at least one cartridge holder incorporated in the line system;
- a sample feed device connected to the line system;
- a solvent feed device connected to the line system; and
- a control system
is known, in which context reference can once again be made to the applicant's Prospekt I and the OPS-2 from Merck-Hitachi. With this equipment, solvent has to be fed to the line system by means of a solvent feed device in a number of the steps to be carried out for an SPE process. In this context, the solvent to be fed to the line system can differ per step of the SPE process and, moreover, the one type of SPE process will require a different solvent or different solvents to the other type of SPE process, In this equipment the solvent feed device generally consists of a pump which draws in solvent from a solvent reservoir and pumps it through directly. The pumps used for this are, inter alia, peristaltic pumps and plunger pumps. The pumps generally used with this arrangement operate at a fixed output. The known pumps are less capable of supplying pulse-free outputs. A further disadvantage of the pumps used in practice is that the accuracy with which a specific quantity of solvent is fed to the SPE instrument is difficult, if not impossible to control accurately, which ultimately can have an adverse effect on the SPE. If an analytical process is subsequently carried out on the basis of the SPE, this can adversely influence the accuracy and reproducibility of the final analysis.

Accordingly a further object of the present invention is to provide an SPE instrument which has an improved solvent feed device. A further object of the invention is to provide an SPE instrument which has a solvent feed device the functioning of which is, in particular, reproducible and/or can be readily controlled/regulated.

An SPE instrument may comprise:
- at least one line system for transporting a liquid;
- a cartridge exchanging system having at least one cartridge holder incorporated in the line system;
- a sample feed device connected to the line system;
- a solvent feed device-connected to the line system; and a control system,
in that the solvent feed device comprises an injection pump and in that the control system is equipped to control the suction stroke speed and/or the suction stroke length of the injection pump to draw in solvent at a specific speed or in a specific quantity. Such an injection pump, which is also referred to as a syringe pump, has the advantage that a specific quantity of solvent can be drawn up very accurately using this pump, optionally at a specific desired speed, in order then to force this solvent, optionally at a specific desired rate and/or a specific desired pressure, through the line system of the SPE instrument. A further advantage of such an injection pump is that, by means of suitable sizing and choice of material, it is, moreover, also able to operate at high to very high pressures (up to 300 bar or possibly higher). In practice the line system will usually contain at least one valve, such as a so-called multi-way valve.

In order to make a constant, pulse-free solvent stream, that is to say a solvent stream with no or at least virtually no rate and/or pressure fluctuations, possible when passing solvent under pressure through the line system, it is highly advantageous according to the invention if the injection pump has been designed with a capacity such that it is able to take up the total quantity of solvent required for an SPE step in order to be able to force this through the line system with an uninterrupted delivery stroke. This is in particular highly advantageous in the conditioning step and the washing step. Specifically, the conditioning step and washing step can then be carried out more efficiently (the volume to be rinsed out between steps is smaller or non-existent) and more rapidly (it is possible to change between steps and sub-steps more rapidly). In the case of the conditioning step it must be pointed out here that the conditioning step can be subdivided into two sub-steps, that is to say a wetting step and an equilibration step. In the wetting step the sorbent is as it were activated by wetting it. In the equilibration step the sorbent is prepared for the application step by passing a liquid through it, which liquid is essentially the same as the liquid in which the sample is contained, or at least shows correspondence with said (sample) liquid.

The accuracy and reproducibility of the SPE process to be carried out using the solid phase extraction instrument can be appreciably improved in this way, which, in the case of a possible subsequent analysis, benefits the accuracy and reproducibility of the analysis.

In this context it is particularly advantageous according to the invention if the control system is equipped first to control the injection pump to take up the total quantity of solvent required for an SPE step and then to control the injection pump to force this total required quantity through the line system with an uninterrupted delivery stroke.

The total quantity of solvent required for an SPE step will in practice be dependent on the volume of the entire line system of the SPE instrument, and on the type of solvent and the type of SPE process to be carried out. Practice shows that a maximum stroke volume for the injection pump of 2 to 10 ml is in general more than adequate.

According to a further advantageous embodiment the control system is equipped to control the injection pump for a delivery stroke with essentially constant speed or delivery pressure. The SPE process to be carried out with the instrument becomes highly reproducible in this way, since variation in the so-called breakthrough of the analyte from/through the sorbent is minimised. This is useful in the case of the washing step and is particularly important in the case of the application step in which analyte is applied to the sorbent In this context the delivery stroke of the injection pump will preferably be controlled at delivery speed, but the delivery pressure can optionally also be used for such a control.

In order to be able to adjust the control of the injection pump by the control system, or if necessary to be able to switch it off in the event of disasters, it is advantageous according to the invention if a pressure sensor for measuring the pressure in the injection pump is provided in or by the injection pump, which pressure sensor is actively connected to the control system in order to transmit a pressure signal to the latter. Feedback of the suction or delivery pressure exerted by the injection pump is possible in this way, which delivery pressure can then be compared by the control system with a reference value in order to make it possible to adjust the injection pump or, if necessary, even to emit a warning signal and/or to switch off the system if there appears to be a malfunction or disaster. The pressure signal, that is to say the change in pressure with time, can also very readily be used as an indicator signal for the progress of the process and/or for monitoring the process. According to an advantageous further embodiment, the SPE instrument is therefore also provided with display means which are coupled to the pressure sensor and display the pressure, preferably the change in the latter with time. Such display means can comprise a monitor and/or printer.

According to the invention rapid and efficient changing between different solvents is possible if the solvent feed device comprises a first multi-way valve to which, on the one side, the injection pump is connected by means of at least one suction channel and which, on the other side, is provided with a number of solvent connections to which solvent reservoirs can be connected or have been connected, and if the control system is equipped to switch the multi-way valve before and/or during suction by the injection pump. In this way it becomes possible for the control system to control feed with the one solvent or the other solvent depending on the step in the SPE process to be carried out and/or depending on the SPE process to be carried out. By switching from the one solvent to the other solvent during suction or at least during the fill phase of the injection pump it becomes possible to draw in a mixture of solvents and thus to make up a solvent mixture as desired and then to pass this under pressure into the line system. In order as far as possible to prevent dead volumes and undesired contamination of a solvent with previously used solvent, it is advantageous according to the invention if the suction channel of the injection pump connected to one side of the multi-way valve is also a pressure channel and if the multi-way valve is further connected on the other side to the line system. By now constructing the combined suction/pressure channel as short as possible, which in practice is relatively simple for a person skilled in the art by, as it were, positioning the multi-way valve directly on the top of the injection pump, the combined suction/pressure channel can be kept as small as possible. In particular if the solvent is driven out of the injection pump into the line system during the delivery stroke under a high pressure, for example 15 to 20 bar or even up to 300 bar or higher, this imposes construction requirements which the multi-way valve must meet and which stand in the way of rapid switching of said multi-way valve during suction. In this context it is then particularly advantageous according to the invention if the solvent feed device comprises at least a further multi-way valve to which, on the one side, one of the solvent connections of the first multi-way valve is connected and which, on the other side, is provided with further solvent connections. This construction is further advantageous if the number of solvents between which it is desired to be able to choose becomes very large. Specifically this means that it is necessary to use cither a very large multi-way valve with a very large number of ports or a smaller multi-way valve connected in series to one or more further smaller multi-way valves. As such, the multi-way valves connected in series can then, as it were, be operated simultaneously in order to make the changeover speed from the one solvent to the other solvent as high as possible.

In order to increase the flexibility of the SPE instrument according to the invention, it is particularly advantageous according to the invention if the control system comprises input means for entering an operator's choice for one or more of the following parameters:
- a specific SPE process; and/or
- a specific solvent or combination of solvents; and/or
- a specific delivery pressure; and/or
- a specific suction speed; and/or
- a specific solvent volume; and/or
- a specific ratio of solvent volumes.

The inventive aspects of the present invention will be explained in more detail below with reference to an illustrative embodiment shown in the drawing. In the drawing:
Fig. 1 shows, diagrammatically, a perspective view of an SPE instrument according to the invention;
Fig. la shows, highly diagrammatically, the cartridge holder 3 from Figure 1.
Fig. 2 shows, as a detail and highly diagrammatically, a perspective view of part of a guide bridge, provided with a cartridge gripper, of the SPE instrument in Fig. 1;
Fig. 3 shows, diagrammatically, a variant of a double guide bridge provided with two cartridge grippers, which guide bridge provided with cartridge grippers could be incorporated as such in the SPE instrument in Fig. 1;
Fig. 4 shows, diagrammatically, the SPE instrument according to Fig. 1 where the line system has been constructed in accordance with a first embodiment;
Figs 5a- 5c show the SPE instrument according to Fig. 4 in three different switch positions;
Fig. 6 shows the diagrammatic construction of an SPE instrument according to Fig. 1, where the line system has been constructed in accordance with a second embodiment;
Fig. 7 shows the diagrammatic construction of an SPE instrument according to Fig. 1 and provided with two solvent feed devices, where the line system has been constructed in accordance with a third embodiment;
Fig. 8 shows the diagrammatic construction of an SPE instrument in accordance with Fig. 7, where, however, the line system has been constructed in accordance with a fourth embodiment.
Fig. 9 SPE-LC chromatograms of an aqueous Xanthine mixture for different SPE temperatures;
Fig. 10 SPE-LC chromatograms of an aqueous Xanthine mixture for different desorption temperatures and
Fig. 11 SPE-LC chromatograms of plasma Xanthines using different SPE wash temperatures.

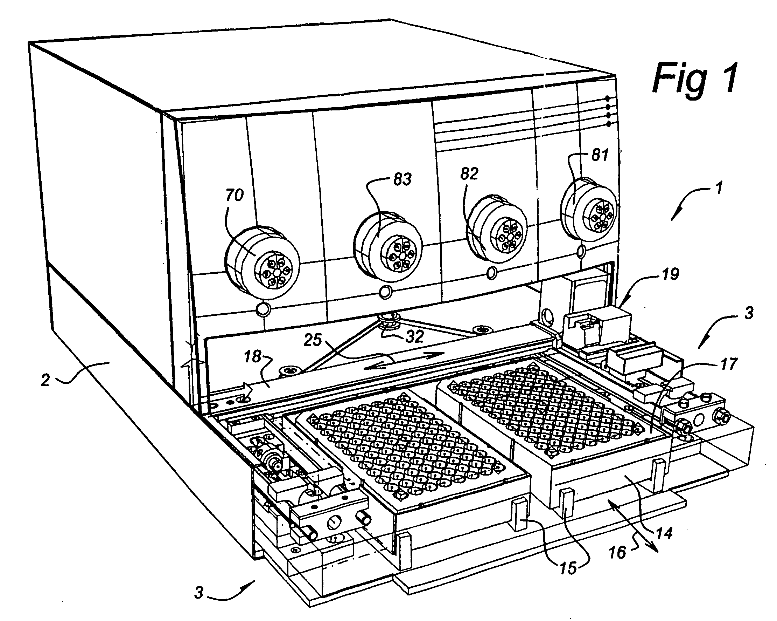

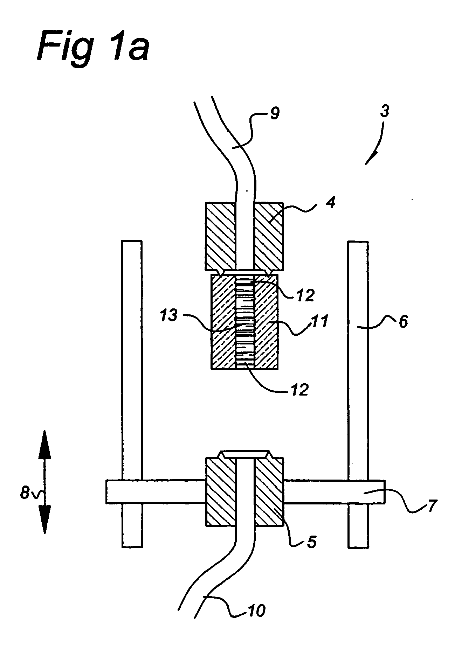

Fig. 1 shows a diagrammatic and perspective view of an SPE instrument according to the present invention in which a number of aspects of the invention have been embodied.

The SPE instrument in its entirety is indicated by the reference numeral 1. This instrument consists of a housing 2, which is shown open at its front but can be provided with a lid, hood or some other sort of cover. A cartridge holder 3 can be seen on the left-and the right-hand side of the open front. With reference to the highly diagrammatic Fig. 1a, each of these cartridge holders essentially comprises two clamping heads 4 and 5, of which clamping head 4 is fixed and clamping head 5 is mounted such that it is movable by means of cheeks 7 over clamping head guides 6. With this arrangement the cheeks 7 run over the guides 6 and make possible to and fro movement of clamping head 5 in accordance with arrow 8. A line 9 is connected to clamping head 4 and a line 10 is connected to clamping head 5. The feed channels of the lines 9 and 10 continue in the clamping heads 4 and 5 and emerge in the front faces of the clamping heads 4 and 5, which front faces face one another.

When the clamping heads 4 and 5 have been moved apart a cartridge 11 can be placed between them, after which clamping head 5 can be moved towards clamping head 4 in order to clamp the cartridge 11 between the clamping heads 4 and 5, sharp, circular ribs provided on the clamping heads being driven into the end faces of the cartridge for fixing and sealing. When the cartridge has been clamped between the clamping heads 4 and 5 it can be released. The cartridge 11 is an essentially cylindrical body with a channel extending through it in the longitudinal direction, in which channel two sealing membranes 12, with a sorbent 13 between them, have been placed. When the cartridge 11 is in the clamped position, liquid can be supplied via line 9, fed through cartridge 11 and discharged via line 10, or conversely, supplied via line 10, fed through the cartridge 11 and discharged via a line 9. By way of indication it is pointed out that cartridge dimensions customary in practice are as follows: external diameter 8 mm, internal diameter of the channel through the cartridge 2 mm and length of the cartridge 10 mm. It should be, or otherwise become, clear that the SPE instrument according to the application is able to work with cartridges of different length without modification. Thus, for example, cartridges with a length of 5 mm, 20 mm or, if desired, even longer or shorter, can also be used. This is a major advantage since the so-called separation efficiency in general increases with the cartridge length, or at least with the length of the channel section filled with sorbent.

Two cartridge magazine holders 14, which are movable to and fro in accordance with double-headed arrow 16 by means of magazine holder guides 15, can also be seen in the exposed section of the SPE instrument 1 and at the front. Each cartridge magazine holder 14 is provided with cartridge magazine 17 containing 96 cartridges 11 positioned in accordance with an 8 x 12 matrix.

The exposed front of Fig. 1 also shows a guide bridge with one cartridge gripper 19, which together form part of the transport system for moving cartridges. The guide bridge 18 with cartridge gripper 19 is shown diagrammatically as a detail in Fig- 2. The guide bridge 18 consists of an upper guide bar 20 and lower guide bar 21, which are fitted with some gaps between them, so that a guide wheel 22 can be fitted at the longitudinal ends of the guide bridge 18 between the upper and lower guide rod. A slide 24 is mounted on the guide bridge 18, which slide 24 is movable/displaceable to and fro along the guide bridge 18 in accordance with double-headed arrow 25 in the longitudinal direction of the guide bridge. A forward-facing arm 26, which is provided at its free end with a support arm 28 attached such that it can swivel by means of hinge 27, is attached to the slide 24. Two gripper arms 29, which can be swivelled apart and towards one another about axis of rotation 30, are fixed alongside one another on the support arm 28. The gripper arms 29 are each provided with two gripper elements 31 in the form of pins.

By means of the cartridge gripper 19 it is possible to take any desired cartridge from a specific cartridge location, that is to say a location from the 8 x 12 matrix pattern, to bring this cartridge to a cartridge holder 3, to place it in said cartridge holder 3, to remove it from said cartridge holder 3 again and to replace it in the same or a different cartridge location in the cartridge magazine or, optionally, in another cartridge magazine. It is also possible by means of the cartridge gripper to take a cartridge from one cartridge location and to put it away directly in another cartridge location or to take a cartridge from a cartridge holder 3 and place it in another cartridge holder 3. All of this is the subject of the second aspect of the invention, which will be explained in more detail below.

The SPE instrument may be provided with a control system that is equipped to determine one of the multiplicity of cartridge locations depending on a command given to the control system via input means and to control the transport system to place a cartridge in that specific cartridge location or to remove a cartridge from that specific cartridge location. This control system can consist of a software program which can be loaded in the SPE instrument itself or can be loaded in a separate computer, such as a so-called personal computer, which to this end does not as such have to be part of the SPE instrument according to the aspects of the invention. The input means can comprise manual input means, automated input means, such as an input program controlled by a computer, and also a combination of the two.

As soon as the control system has determined a specific cartridge location in a specific cartridge magazine, the control system is able to position the cartridge gripper 19 with its gripper elements 31 around the cartridge to be gripped and to grasp this cartridge. To this end the control system is able to move the slide 24, by means of the toothed belt 23 attached thereto and the toothed belt drive 33, into the correct position on the guide bridge 18, to position the gripper elements 31, if necessary, in a vertical position by swivelling support arm 28 into a horizontal position, located in the extension of arm 26, by means of swivelling means which are not shown, such as, for example, a piston-cylinder unit which at the one end engages on support arm 28 and at the other end engages on the slide 24, to move the cartridge magazine holder 14 concerned along the guides 15, by means of a drive which is not shown, into its correct position (in which context the cartridge magazine holder drive which is not shown can, for example, comprise a toothed belt which is attached thereto and drives via a stepper motor) and also to move the guide bridge 18 up and down in the vertical direction in accordance with double-headed arrow 32 by means of lifting means, which are not shown, such as, for example, a cylinder piston unit, in order to be able to grasp a cartridge and to be able to lift a cartridge that has been grasped out of its cartridge location in the cartridge magazine. It will be clear that the control system is also capable of controlling all these movements in an arbitrary direction and also in the reverse direction. Instead of moving the guide bridge up and down in accordance with double-headed arrow 32, it is also possible to move the support arm 28 up and down with respect to the guide bridge in accordance with double-headed arrow 32 or to swivel the support arm 28 towards a cartridge in order to grasp said cartridge and to swivel it away from the cartridge magazine in order to remove a cartridge from a cartridge location (or the other way round in the case of placing a cartridge in a cartridge magazine).

The control system is thus capable, depending on a command given to the control system via input means, of determining a cartridge location containing a cartridge suitable for the SPE process to be carried out and placing this cartridge in a cartridge holder for carrying out the SPE process. Since after the cartridge has been used once in an SPE process it will in general no longer have to be used in a subsequent SPE process, the control system will also be provided with a memory or register to keep a record of which cartridges have been used and which cartridges have not yet been used. The cartridge location to be determined by the control system will in general contain an unused cartridge.

If each cartridge location in each cartridge magazine contains a predetermined type of cartridge, these data then have to be entered in the control system only once. However, it is also conceivable to link a coding or data carrier with each cartridge magazine, which coding or data carrier contains information on which type of cartridge has been placed in which cartridge location. These data can then be input into the control system, optionally automatically, when placing a cartridge magazine in the cartridge magazine holder. Conceivable codings and data carriers are, for example, RF (radio frequency) codings, bar codes, dot codes, radiographically readable memory chips, etc.

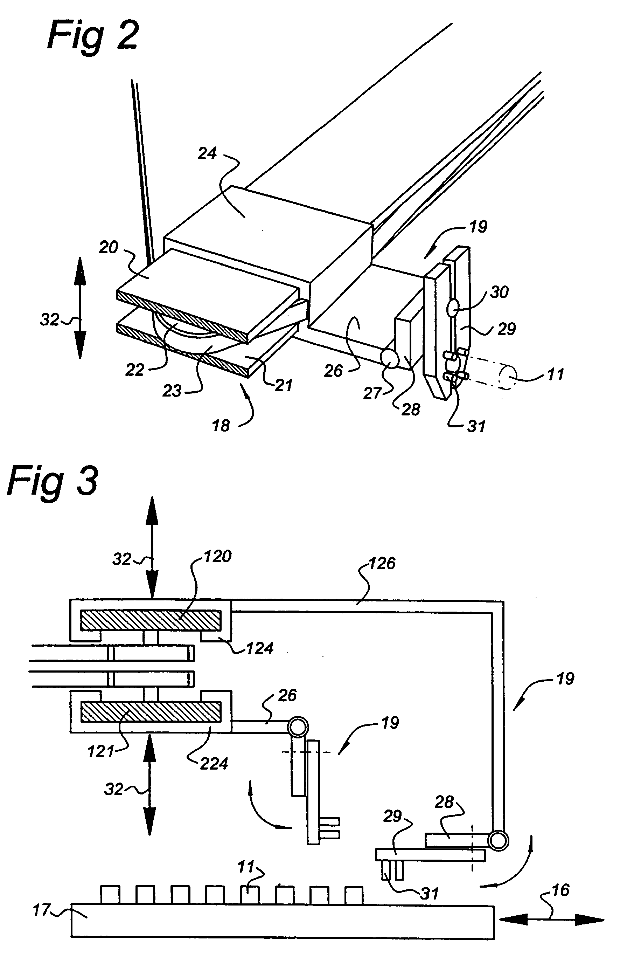

With regard to the cartridge holder it must also be pointed out that the clamping head, or at least the movable clamping head 5, will also be controllable by the control system. As will be clear from Fig. 1 and Fig. 2, the cartridge, which is taken out of the cartridge magazine in the vertical position, first has to be brought into the horizontal position for placing in a cartridge holder and the cartridge will be placed with an end face in contact with the fixed clamping head 4, during which operation the free ends of the gripper arms 29 can be located without contact around the clamping head 4, and the control system will then move clamping head 5 towards clamping head 4 by means of means which are not shown, such as a piston-cylinder unit, a toothed belt or a gear.

It should be clear that according to the second inventive aspect of the application the control system is equipped to be able to control all the operations/manipulations which have just been described.

It should also be clear that high flexibility can be achieved with an SPE instrument.

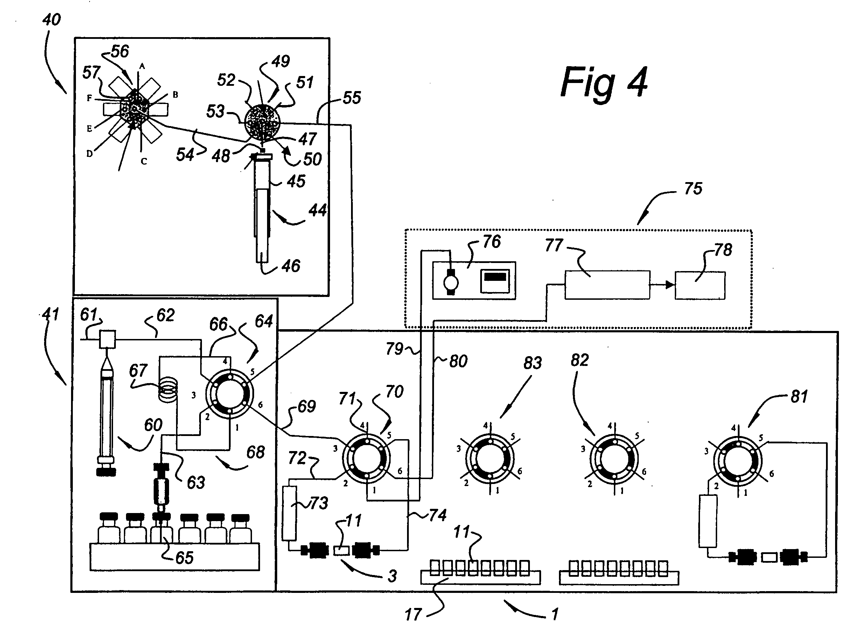

As a consequence of the two or more cartridge holders 3, it is also possible simultaneously to subject two or more cartridges to the same step in a given SPE process or to different steps in a given SPE process or to different/the same steps in different SPE processes. This will become yet clearer below with reference to Figures 4 to 8.

If the SPE instrument has only one cartridge gripper 19, the cartridge magazines 17, if there are several, can have been inserted in a common cartridge magazine holder 14 which is movable to and fro as a whole in accordance with the arrow 16. If the guide bridge 18 is provided with two cartridge grippers 19, the cartridge magazines 17 will preferably be movable to and fro independently of one another in accordance with double-headed arrow 16 and, for that reason, each cartridge magazine will have been installed in a separate cartridge magazine holder 14, as is outlined in Fig. 1. The reason for this is that it is then possible to allow the cartridge grippers 19 independently of one another, and optionally simultaneously, to pick up a cartridge from a cartridge magazine or to set down a cartridge in a cartridge magazine.

According to Figure 3 it is possible further to increase the mutual independence of the cartridge grippers 19 (and thus also the flexibility of the SPE instrument as a whole) if each cartridge gripper 19 is mounted on its own guide. The one cartridge gripper 19 is fixed via an arm 126, in the form of an angle bar, to a slide 124, which slide 124 is movable along an upper guide bar 120, and the other cartridge gripper 19 is fixed by means of an arm 26 to slide 224, which slide 224 is movable along a guide bar 121. With this arrangement the upper guide bar 120 and the lower guide bar 121 will be movable independently of one another up and down in the vertical direction in accordance with double-headed arrow 32. In Fig. 3 the upper guide bar 120 is shown in its lowest position and the lower guide bar 121 is shown in its highest position.

By providing several cartridge grippers 19 and making these cartridge grippers such that they can as far as possible be manipulated independently of one another, the speed at which the cartridge grippers 19 can perform operations can be made as high as possible since the cartridge grippers 19 then interfere with one another as little as possible.

After first explaining in more detail the diagrammatic construction of an embodiment of an SPE instrument according to the invention with reference to the diagram shown in Fig. 4, a further aspect of this application will be discussed in more detail below with reference to Fig. 4.

An SPE configuration according to the invention comprises at least one solvent feed device 40, at least one sample feed device 41 and a cartridge exchanging system with at least one cartridge holder 3 therein. The block indicated by 1 in Figures 4 - 8 corresponds to the SPE instrument in Figure 1. As far as the claims are concerned, the solvent connection and sample connection of the SPE instrument according to Figure 1 can be regarded as solvent feed device and sample feed device, respectively. The SPE instrument may further comprise a line system and valves which can be controlled by the control system and via which a wide variety of liquid communications can be obtained. Further details of the wide variety of liquid communications that can be obtained will be given further below. First of all, the solvent feed device 40, to which a specific aspect of the invention relates in particular, will now be discussed in more detail below.

The solvent feed device may comprise a so-called injection pump, also termed a syringe pump, which is provided with a pressure sensor which is capable of measuring the liquid pressure in the injection pump, or the line system connected to the latter, during suction and/or delivery by the injection pump and of transmitting a signal reading proportional to the measurement to the control system. The injection pump 44 consists of a piston housing 45, in which a piston 46 is accommodated, which piston 46 can be controlled by means of the control system for movement. The injection pump 44 can draw in or expel a liquid via the compressed suction/delivery line 47. The pressure sensor 48 is fitted in order to measure the pressure in the suction/delivery line. The suction/delivery line 47 opens into one side of a multi-way valve 49, which on the other side is provided with six line connections. Four of these line connections, that is to say line connections 51, 52, 53 and 54, are solvent feed lines, line connection 50 is a discharge connection for waste, and solvent can be fed in via line connection 55 when the line system of the SPE instrument is under pressure. In the embodiment according to Fig. 4, the multi-way valve 49 is of the type that is suitable for high pressures, that is to say pressures of 10 to 20 bar and higher, up to possibly even 300 bar. This makes this multi-way valve 49 less suitable for rapid switching between the one solvent connection and the other solvent connection. In order nevertheless to be able to switch rapidly and reliably between different solvent feeds while drawing solvent into the injection pump 44, solvent connection 54 is connected to one side of a second multi-way valve, which on its other side is provided with six solvent connections A to F. Operated by means of a solenoid, this second multi-way valve can switch rapidly from the one solvent connection to the other solvent connection, so that a mixture of different solvents can be drawn in during a suction stroke.

Both the second multi-way valve 56 with six solvent connections 57 and the first multi-way valve 49 are switchable by means of the control system, or at least the control system is equipped to be able to switch the multi-way valve 49 and the multi-way valve 56, preferably independently of one another. The control system is further equipped to be able to control the speed at which the piston 46 is moved in the delivery direction or the suction direction and/or to be able to control this in such a way that a specific pressure level is maintained or followed in the suction/delivery line or internal injection pump 44 and/or that a specific volume of solvent or solvents is drawn into the injection pump 44 or is delivered into the line system by means of the injection pump 44.

The sample feed device 41 comprises an injection pump 60 which in terms of action can be comparable to injection pump 44 and preferably will be controllable/operable via the control system. Line 61 is a discharge line, and via line 62, line 66, coil 67, line 68 and line 63 sample liquid can be drawn in from sample 65 until at least line 68 and coil 67, and preferably also line 66, have been filled with sample liquid. This is possible when multi-way valve 64 is in the switch position shown in Fig. 4.

With regard to the multi-way valves 64, 70, 81, 82 and 83 in Figures 4 - 8 it is pointed out that the parts shown in black represent liquid communications between adjacent connection points whilst the parts shown in white represent closures between adjacent connection points and that these multi-way valves are switchable between two positions. On switching between the two positions, the ring of black and white sections is, as it were, turned through 60°.

When multi-way valve 64 is in the switch position shown in Fig. 4 it is possible simultaneously to fill the sub-line system of the sample feed device with a sample liquid and, with the aid of the solvent feed device, to feed solvent via line 55, multi-way valve 64 and line 69, to multi-way valve 70. As far as the operating positions are concerned, multi-way valve 70 is comparable to multi-way valve 64. When multi-way valve 70 is in the switch position shown, solvent supplied via line 69 will be discharged via line 71. However, when multi-way valve 70 is switched over, solvent supplied via line 69, or optionally sample liquid supplied via line 69, will be fed via line 72 and heating/cooling means 73 to the cartridge holder 3, passed through the cartridge 11, returned to the multi-way valve 70 via line 74 and discharged via line 71.

In addition to the SPE instrument, a so-called HPLC analytical instrument is shown diagrammatically in dotted lines and a frame in Fig. 4. This HPLC analytical instrument 75 consists of a pump 76, a column 77 and a detection device 78 connected downstream of this. Pump 76 is connected by means of line 79 to the multi-way valve 70 and the column 77 is connected by means of line 80 to the multi-way valve 70. With the switch position of the multi-way valve 70 shown in Fig. 4 it is possible by means of pump 76 to pump liquid through, successively, line 80, line 72, heating/cooling means 73, cartridge 11, line 74, line 79 and finally to and through column 77.

An SPE process can be conceived as being made up of the following steps:
- Step A: a conditioning step, in which sorbent 13 present in cartridge 11 is prepared/conditioned for a subsequent application of sample liquid, which conditioning step usually can be subdivided into a wetting step (Step A1) and an equilibration step (Step A2);
- Step B: an application step, in which sample liquid is supplied to the system and is passed through the sorbent, which application step can be subdivided into a step B1, in which sample liquid is loaded into the system, and a step B2, in which the sample liquid loaded is passed through the sorbent in the cartridge 11;
- Step C: the washing step, in which the sorbent, after having been exposed to the sample liquid, is washed with a solvent in order to flush undesired substance from the sorbent;
- Step D: the elution step, in which the analyte taken up in the sorbent is eluted from the sorbent in order to be able to subject this analyte to a further treatment.

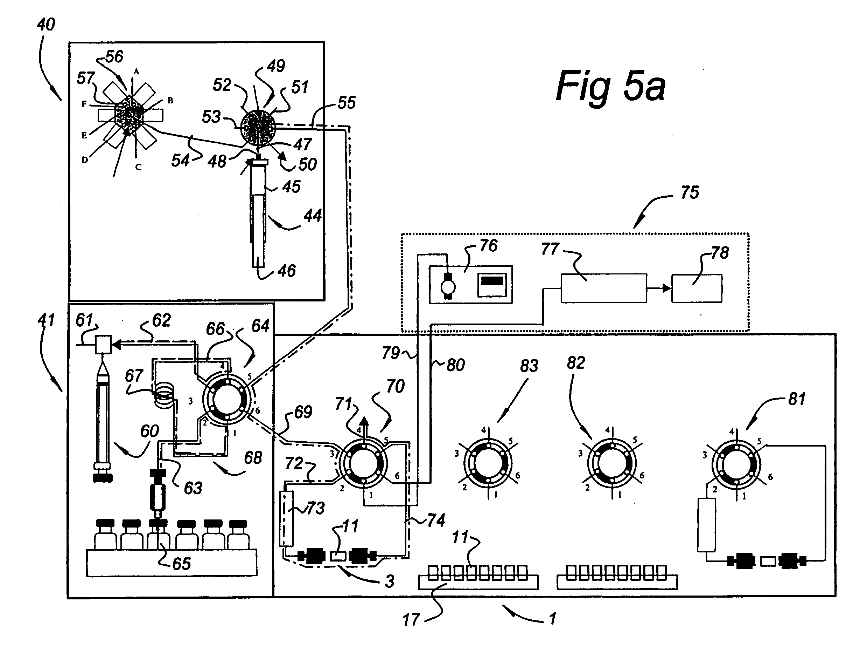

On the basis of these steps A to D, Figure 5a, with the switch positions for the multi-way valves 64 and 70 shown in this figure, shows Step A and Step B1. In this figure Step A, conditioning of the sorbent with solvent, is illustrated in more detail by indicating the stream of solvent through the line system in more detail by a broken line pattern running parallel to that part of the line system through which the solvent flows. Loading of sample liquid into the sub-line system of the sample feed device is illustrated in more detail by showing a dotted line pattern along that part of the sub-line system through which sample liquid flows. With this arrangement, conditioning of the sorbent with solvent can take place by successively feeding, for example, solvent originating from solvent connection line 52 and solvent originating from solvent connection line 53 through cartridge 11. Moreover, by drawing in solvent via multi-way valve 56 during the suction phase of the injection pump 44 and switching multi-way valve 56 while drawing in, a mixture of solvents can be collected in injection pump 44, after which this mixture can be passed through the sorbent 13 in cartridge 11 during the delivery phase. This possibility for conditioning with solvent mixture or conditioning with different solvents in succession is a very great advantage when developing new SPE processes. If necessary, the heating/cooling means can be used to heat or, respectively, to cool the solvent before it is passed through the sorbent. In general, steps A1 and A2 will be separated by a delivery stroke of the injection pump.

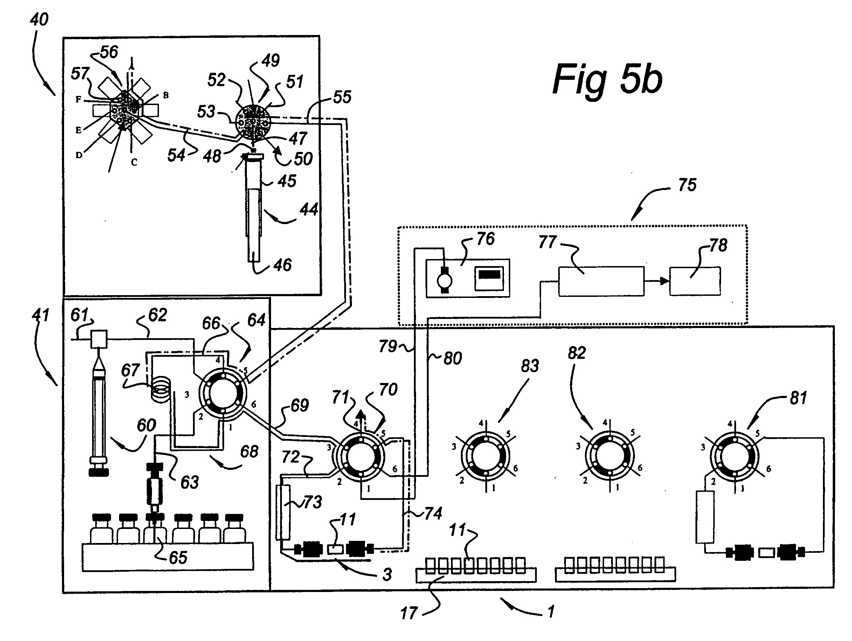

Figure 5b, with the switch positions for the valves 64 and 70 shown in that figure, shows step B2 followed by step C. The sample liquid (dotted line) is passed through the sorbent in the cartridge by means of a wash solvent (dash-and-dot line) whilst the residual conditioning sorbent (broken line) is driven out of the system.

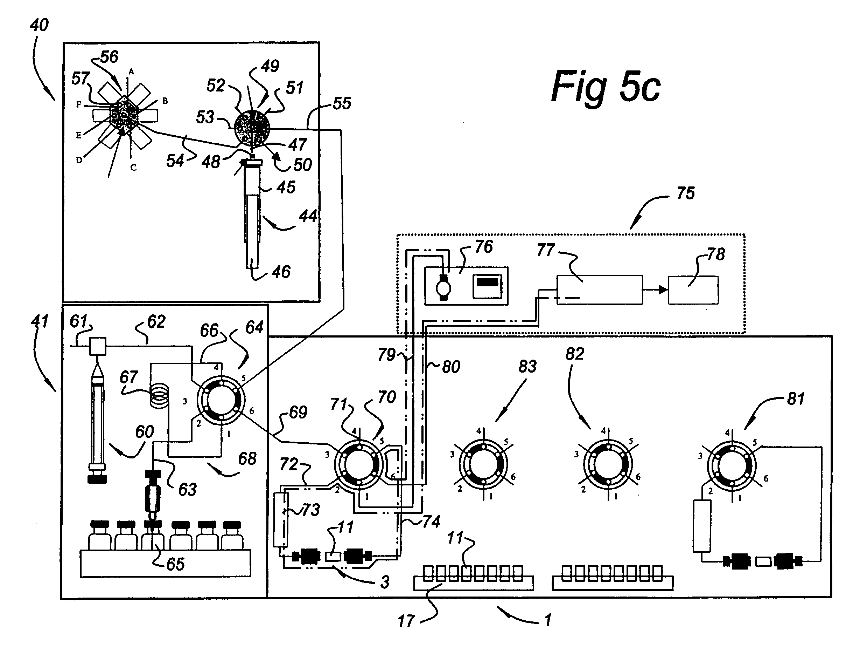

Figure 5c then shows step D, the elution step, in which use is made of the pump of the HPLC instrument for feeding the elution liquid (indicated by a dash-and-dot-and-dot line) from the pump through the line system, through the sorbent 13 in cartridge 11 and through the column 77.

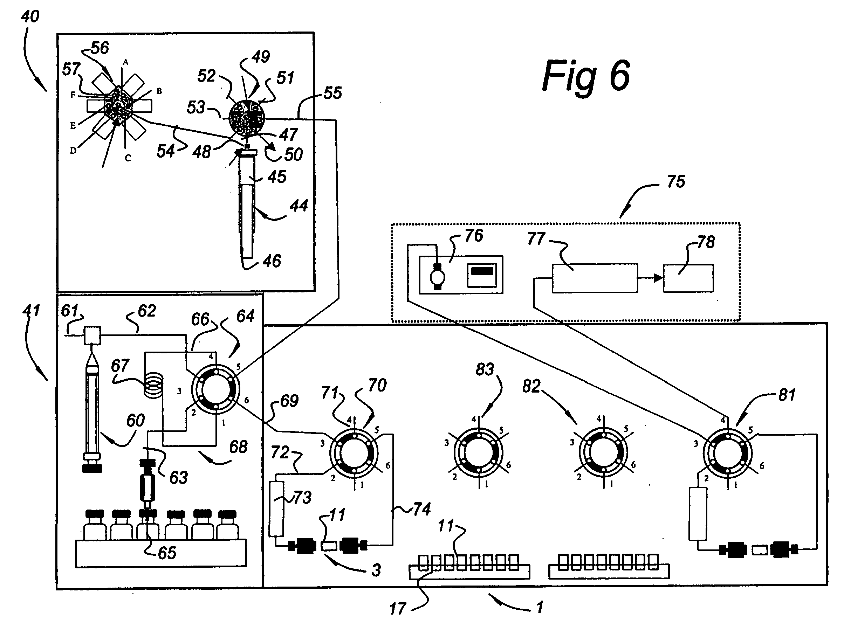

Figure 6 shows a diagrammatic construction of an SPE configuration according to the invention, the line system being constructed in accordance with a second embodiment. With this arrangement, the processing capacity of the SPE instrument is increased by connecting the HPLC analytical instrument to an additional multi-way valve 81, to which a second cartridge holder is connected. The difference here compared with the construction of the line system according to Figures 4 and 5 is that the so-called elution step (see Figure 5c) can be carried out at the same time as one or more of the steps A, B and C of a subsequent SPE process. After a cartridge in the left-hand cartridge holder has been subjected to steps A, B and C, this cartridge will be transferred by means of a cartridge gripper 19 to the right-hand cartridge holder in order to be subjected to the elution step there. As far as carrying out steps A, B and C, and the associated switch positions of the multi-way valves 64 and 70, are concerned, reference can be made to Figures 5a and 5b.

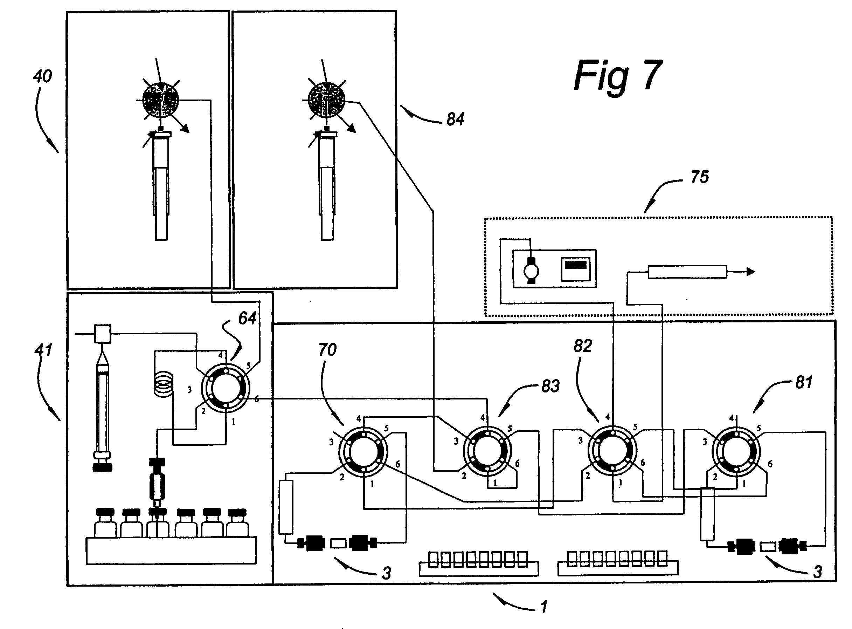

In the embodiment according to Figure 7, the SPE configuration has been expanded by a second solvent feed device.

Furthermore, in the embodiment according to Figure 7 use is made of two additional multi-way switching valves, that is to say 82 and 83. With the embodiment according to Figure 7 it is possible, if the multi-way valves 70, 81, 82 and 83 are in suitable switch positions, to subject either the cartridge in the left-hand cartridge holder 3 or the cartridge in the right-hand cartridge holder 3 to an elution step. Furthermore, if the valves 70, 83, 82 and 81 are in suitable switch positions, the second solvent feed device 84 can be used to pass solvent both through the left-hand cartridge holder and through the right-hand cartridge holder. Furthermore, if the multi-way valves 64, 70, 81, 82 and 83 are suitably actuated, the first solvent feed device 40 can feed its solvent both through the left-hand and through the right-hand cartridge holder, which furthermore also implies that the sample liquid can also be fed through both the right-hand and the left-hand cartridge holder. It should be clear that since the first solvent feed device 40, the second solvent feed device 84, the sample feed device 41 and the HPLC analytical instrument 75 can all be brought into liquid communication both with the left-hand and with the right-hand cartridge holder, the construction of the line system in combination with the switching valve as shown in Figure 7 offers very great freedom in possibilities for carrying out different or identical steps A to D simultaneously.

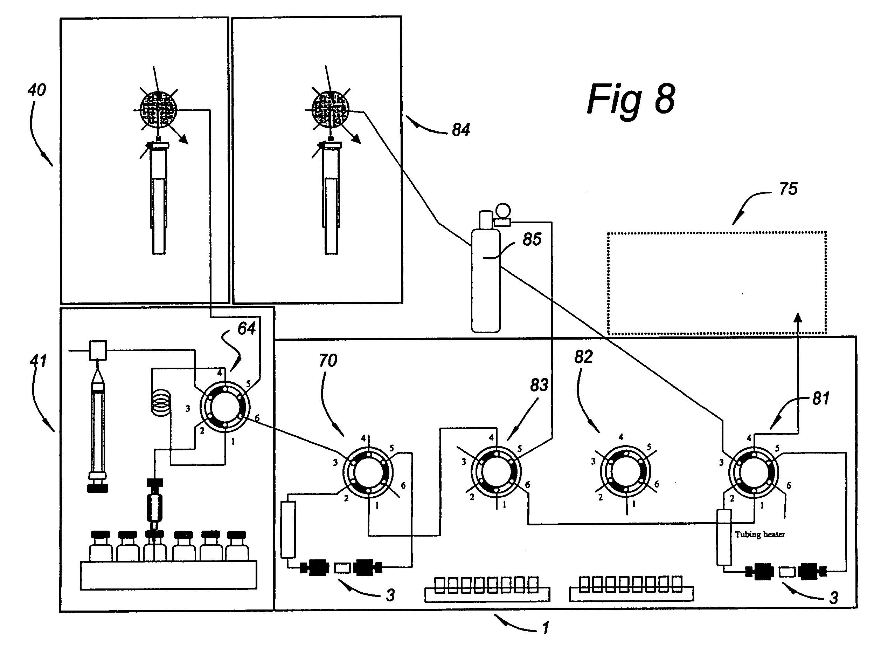

Figure 8 shows a fourth embodiment of the construction of a line system in which the multi-way valve 82 is left unused, a gas source 85, in particular a source of helium gas, which is very readily usable as so-called drying gas, being connected to the multi-way valve 83, and with which multi-way valve 81 can optionally be connected to an analytical instrument such as a gas chromatograph. The variation in switching possibilities should be obvious here.

With regard to Figures 4 - 8, it will furthermore be clear that the control system is equipped to be able to control all valves, the heating and/or cooling means, the injection syringe, etc. The control system is furthermore suitable for loading a control program via the input means.

With regard to the various embodiments outlined it is pointed out that in general at least one valve, such as a so-called multi-way valve, per cartridge holder is needed.

Furthermore, it is pointed out that use can also be made of a cartridge without sorbent. With reference to Figure 1a this means that a cartridge with one or two or more closure membranes 12 or other membranes is used and the sorbent 13 is omitted, the membranes then acting as a filter or screen, in particular a high pressure filter. Such a cartridge without sorbent can then be positioned upstream (or if useful possibly also downstream) of a cartridge containing sorbent, the two cartridges then being connected in series. This can be useful, inter alia, in the case of samples containing pollutants which can be filtered out or screened out. It is optionally even conceivable to use such a cartridge without sorbent as a filter or screen in order to feed an analyte-containing sample directly to a further analytical instrument, without employing any SPE process. A cartridge without sorbent but containing one or more membranes acting as filter or screen can be used in each of the three or even four inventive aspects of this application individually.

### Examples

The following examples show that according to the first aspect of the invention a number of distinct improvements with respect to speed and performance of on-line SPE can be obtained.

Using an apparatus as described before in relation to figure 4 experiments were carried out. More specifically the following HPLC conditions were used. Two isocratic HPLC separations with UV detection (280 nm) were developed for Caffeine (Ca), Theobromine (Tbr) and Theophylline (Tph) on a 30 x 4 mm, 3 µm, Nucleosil C18 column (Machery Nagel) and on a 125 x 4 mm, 5 µm, Hibar C 18 column (Merck). Mobile phase: Acetonitril (ACN)/water; 3/97 for the 3 cm column, 10/90 for the 12.5 cm column. The flow rate was 1 mL/min for 3 cm column and 0.7 mL/min for 12.5 cm column.

The sample consisted of water and pooled human plasma both with 1 ppm Xanthines. The sample was used without any prior treatment.

A 10 x 2 mm SPE cartridge with a generic strong hydrophobic sorbent (HySphere GP, Spark Holland) was used for SPE. An SPE-process consisting of the following steps was carried out:
A1 solvation of sorbent with 2 mL methanol, 5 mL/min;
A2 equilibration of sorbent with 5 mL water, 5 mL/min;
B application of sample on cartridge with 1 mL water, 1 mL/min;
C wash with x mL water, 1 mL/min;
D desorption to HPLC with LC mobile phase.

### Example 1

### Influence of temperature changes on extraction recovery

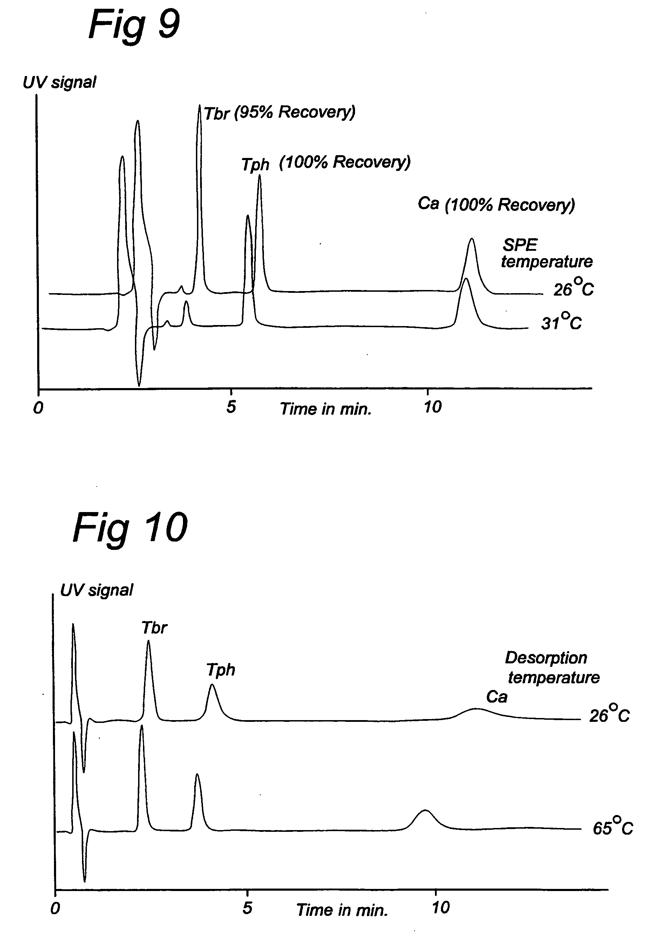

Figure 9 shows SPE-LC analyses of an aqueous Xanthine mixture for different temperatures of the SPE cartridge during the entire SPE process as a simulation of ambient temperature changes. In this example a HySphere GP cartridge, 12.5 cm C18 column and an injection volume of 20 µL were used. The wash (SPE step C) was optimized to 6.5 mL, the maximum volume before significant breakthrough of Tbr occurs. A dramatic loss of Tbr is the result of only 5 °C change in temperature whereas both Tph and Ca maintain 100 % recovery. This example shows that temperature control for the SPE process will improve to maintain assay precision.

### Example 2

### Influence of temperature on desorption efficiency

Figure 10 shows SPE-LC analyses of an aqueous Xanthine mixture for different temperatures of the SPE cartridge during desorption by the LC mobile phase; SPE step D. In this example a HySphere GP cartridge, 3 cm C18 column and an injection volume of 20 µL were used. The wash (SPE step C) volume is 0.5 mL. SPE steps A1, A2, B and C are kept at 25 °C.

Clearly, at a high temperature desorption from the SPE cartridge is accomplished in a much smaller volume resulting in a significant improvement of the overall SPE-LC efficiency and a reduction of analysis time.

### Example 3

### Influence of temperature on clean-up

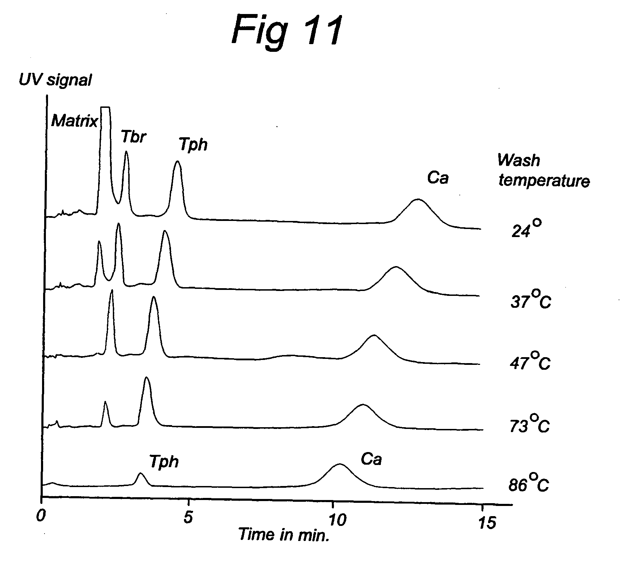

Figure 11 shows SPE-LC analyses of plasma spiked with Xanthine mixture using different temperatures for the SPE wash step (SPE step C). In this example a HySphere GP cartridge, 3 cm C18 column and an injection volume of 100 µL were used. The wash volume is 0.5 mL. Other SPE steps are kept at 25 °C. 100 µL plasma was injected.

Increasing the temperature up to 47 °C during the SPE wash step, enables the complete removal of early eluting matrix constituents. Further increase of the temperature causes breakthrough and thus loss of the Xanthines.

## Claims

1. Solid phase extraction process for extracting an analyte from a sample comprising the following steps:
a) conditioning a sorbent in a cartridge by passing a liquid suitable for conditioning through the cartridge;
b) applying a sample that contains the analyte to the sorbent by passing a liquid which contains the sample through the cartridge;
c) washing the sorbent by passing a wash liquid through the cartridge;
d) eluting the analyte from the sorbent by passing an elution liquid through the cartridge,
**characterised in that** the temperature of the cartridge is raised or lowered to a predetermined value during one or more of the steps a) to d).

2. Solid phase extraction process according to Claim 1, **characterised in that** the temperature of the cartridge is raised or lowered by heating or cooling one or more of the liquids used in step a) to d) before feeding to the cartridge.

3. Solid phase extraction process according to Claim 1 or 2, **characterised in that** the temperature of the cartridge is raised or lowered in step a), preferably by heating or cooling the liquid for conditioning of the sorbent.

4. Solid phase extraction process according to Claim 1 or 2, **characterised in that** the temperature of the cartridge is raised or lowered in step b), preferably by heating or cooling the liquid which contains the sample.

5. Solid phase extraction process according to Claim 1 or 2, **characterised in that** the temperature of the cartridge is raised or lowered in step c), preferably by heating or cooling the wash liquid.

6. Solid phase extraction process according to Claim 1 or 2, **characterised in that** the temperature of the cartridge is raised or lowered in step d), preferably by heating or cooling the elution liquid.

7. Solid phase extraction process according to one of the preceding claims which also comprises the step of drying the cartridge, before or after one or more of the steps a) to d), drying being carried out by passing a suitable gas through the cartridge, **characterised in that** the gas is heated prior to feeding to the cartridge.

8. Solid phase extraction instrument comprising:
- at least one line system for transporting a liquid;
- a cartridge exchanging system having at least one cartridge holder (3) for holding a cartridge (11) incorporated in the line system;
- a sample feed device (41) connected to the line system;
- a solvent feed device (40) connected to the line system,
wherein the sample feed device (41) and the solvent feed device (40) are connected by the line system to the cartridge holder (3) such that a liquid can be transported from the sample feed device (41) or the solvent device (40) to the cartridge holder (3) and can pass through the cartridge (11),
**characterised in that**
the line system is provided with heating and/or cooling means (73) such that the liquid issuing from the sample feed device (41) or the solvent feed device (40) flows successively through the heating and/or cooling means (73) and the at least one cartridge holder (3).

9. Solid phase extraction instrument according to Claim 8, comprising a control system, **characterised in that** the control system is equipped to be able to control the heating and/or cooling means.

10. Solid phase extraction instrument according to Claim 8 or 9, **characterised in that** the line system is provided with a gas connection and valve means in order to connect the gas connection to the heating and/or cooling means (73) and the at least one cartridge holder (3) in such a way that gas issuing from the gas connection flows successively through the heating and/or cooling means (73) and the at least one cartridge holder (3).

## Patentansprüche

1. Festphasenextraktionsverfahren zum Extrahieren eines Analyten aus einer Probe, mit den folgenden Schritten:
a) Konditionieren eines Sorptionsmittels in einer Kartusche durch Leiten einer für das Konditionieren geeigneten Flüssigkeit durch die Kartusche;
b) Aufbringen einer den Analyt enthaltenden Probe auf das Sorptionsmittel durch Leiten einer die Probe enthaltenden Flüssigkeit durch die Kartusche;
c) Spülen des Sorptionsmittels durch Leiten einer Spülflüssigkeit durch die Kartusche;
d) Eluieren des Analyten aus dem Sorptionsmittel durch Leiten einer Elutionsflüssigkeit durch die Kartusche,
**dadurch gekennzeichnet, dass** die Temperatur der Kartusche während eines oder mehrerer der Schritte a) bis d) auf einen vorbestimmten Wert angehoben oder abgesenkt wird.

2. Festphasenextraktionsverfahren nach Anspruch 1, **dadurch gekennzeichnet, dass** die Temperatur der Kartusche erhöht oder gesenkt wird, indem eine oder mehrere der in den Schritten a) bis d) verwendeten Flüssigkeiten vor dem Einleiten in die Kartusche erwärmt oder gekühlt werden.

3. Festphasenextraktionsverfahren nach Anspruch 1 oder 2, **dadurch gekennzeichnet, dass** die Temperatur der Kartusche im Schritt a) vorzugsweise durch Erwärmen oder Kühlen der für das Konditionieren des Sorptionsmittels vorgesehenen Flüssigkeit erhöht oder gesenkt wird.

4. Festphasenextraktionsverfahren nach Anspruch 1 oder 2, **dadurch gekennzeichnet, dass** die Temperatur der Kartusche im Schritt b) vorzugsweise durch Erwärmen oder Kühlen der die Probe enthaltenden Flüssigkeit erhöht oder gesenkt wird.

5. Festphasenextraktionsverfahren nach Anspruch 1 oder 2, **dadurch gekennzeichnet, dass** die Temperatur der Kartusche im Schritt c) vorzugsweise durch Erwärmen oder Kühlen der Spülflüssigkeit erhöht oder gesenkt wird.

6. Festphasenextraktionsverfahren nach Anspruch 1 oder 2, **dadurch gekennzeichnet, dass** die Temperatur der Kartusche im Schritt d) vorzugsweise durch Erwärmen oder Kühlen der Elutionsflüssigkeit erhöht oder gesenkt wird.

7. Festphasenextraktionsverfahren nach einem der vorhergehenden Ansprüche, welches ferner den Schritt des Trocknens der Kartusche vor oder nach einem oder mehreren der Schritte a) bis d) umfasst, wobei das Trocknen durch Leiten eines geeigneten Gases durch die Kartusche erfolgt, **dadurch gekennzeichnet, dass** das Gas vor dem Leiten in die Kartusche erwärmt wird.

8. Festphasenextraktionsgerät mit:
- mindestens einem Leitungssystem zum Transportieren einer Flüssigkeit;
- einem Kartuschenwechselsystem mit mindestens einem Kartuschenhalter (3) zum Halten einer Kartusche (11), die in dem Leitungssystem enthalten ist;
- einer mit dem Leitungssystem verbundenen Probenzuführvorrichtung (41);
- einer mit dem Leitungssystem verbundenen Lösemittelzuführvorrichtung (40);
wobei die Probenzuführvorrichtung (41) und die Lösemittelzuführvorrichtung (40) durch das Leitungssystem mit dem Kartuschenhalter (3) verbunden sind, so dass eine Flüssigkeit von der Probenzuführvorrichtung (41) oder der Lösemittelzuführvorrichtung (40) zum Kartuschenhalter (3) transportiert werden kann und durch die Kartusche (11) fließen kann,
**dadurch gekennzeichnet, dass**
das Leitungssystem mit Heiz- und/oder Kühleinrichtungen (73) versehen ist, so dass die von der Probenzuführvorrichtung (41) oder der Lösemittelzuführvorrichtung (40) kommende Flüssigkeit nacheinander durch die Heiz- und/oder Kühleinrichtungen (73) und den wenigstens einen Kartuschenhalter (3) strömt.

9. Festphasenextraktionsgerät nach Anspruch 8, mit einem Steuersystem, **dadurch gekennzeichnet, dass** das Steuersystem zum Steuern der Heiz- und/oder Kühleinrichtungen ausgebildet ist.

10. Festphasenextraktionsgerät nach Anspruch 8 oder 9, **dadurch gekennzeichnet, dass** das Leitungssystem mit einem Gasanschluss und Ventileinrichtungen versehen ist, um den Gasanschluss mit den Heiz- und/oder Kühleinrichtungen (73) und dem mindestens einen Kartuschenhalter (3) derart zu verbinden, dass das von dem Gasanschluss kommendes Gas nacheinander durch die Heiz- und/oder Kühleinrichtungen (73) und den wenigstens einen Kartuschenhalter (3) strömt.

## Revendications

1. Procédé d'extraction en phase solide pour extraire un analyte d'un échantillon comprenant les étapes suivantes consistant à :
a) conditionner un sorbant dans une cartouche en faisant passer un liquide adapté pour conditionnement à travers la cartouche ;
b) appliquer un échantillon qui contient l'analyte sur le sorbant en faisant passer un liquide qui contient l'échantillon à travers la cartouche ;
c) laver le sorbant en faisant passer un liquide de lavage à travers la cartouche ;
d) éluer l'analyte du sorbant en faisant passer un liquide d'élution à travers la cartouche,
**caractérisé en ce que** la température de la cartouche est augmentée ou abaissée à une valeur prédéterminée durant une ou plusieurs des étapes a) à d).

2. Procédé d'extraction en phase solide selon la revendication 1, **caractérisé en ce que** la température de la cartouche est augmentée ou abaissée en chauffant ou en refroidissant un ou plusieurs des liquides utilisés dans les étapes a) à d) avant chargement dans la cartouche.

3. Procédé d'extraction en phase solide selon la revendication 1 ou 2, **caractérisé en ce que** la température de la cartouche est augmentée ou abaissée dans l'étape a), de préférence en chauffant ou en refroidissant le liquide pour conditionnement du sorbant.

4. Procédé d'extraction en phase solide selon la revendication 1 ou 2, **caractérisé en ce que** la température de la cartouche est augmentée ou abaissée dans l'étape b), de préférence en chauffant ou en refroidissant le liquide qui contient l'échantillon.

5. Procédé d'extraction en phase solide selon la revendication 1 ou 2, **caractérisé en ce que** la température de la cartouche est augmentée ou abaissée dans l'étape c), de préférence en chauffant ou en refroidissant le liquide de lavage.

6. Procédé d'extraction en phase solide selon la revendication 1 ou 2, **caractérisé en ce que** la température de la cartouche est augmentée ou abaissée dans l'étape d), de préférence en chauffant ou en refroidissant le liquide d'élution.

7. Procédé d'extraction en phase solide selon l'une quelconque des revendications précédentes qui comprend en outre l'étape consistant à sécher la cartouche, avant ou après une ou plusieurs des étapes a) à d), le séchage étant effectué en faisant passer un gaz adapté à travers la cartouche, **caractérisé en ce que** le gaz est chauffé avant le chargement dans la cartouche.

8. Instrument d'extraction en phase solide comprenant :
au moins un système de voie pour transporter un liquide ;
un système d'échange de cartouche ayant au moins un support de cartouche (3) pour soutenir une cartouche (11) incorporée dans le système de voie ;
un dispositif d'alimentation d'échantillon (41) raccordé au système de voie ;
un dispositif d'alimentation de solvant (40) raccordé au système de voie ;
dans lequel le dispositif d'alimentation d'échantillon (41) et le dispositif d'alimentation de solvant (40) sont raccordés par le système de voie au support de cartouche (3) de sorte qu'un liquide puisse être transporté depuis le dispositif d'alimentation d'échantillon (41) ou le dispositif de solvant (40) au support de cartouche (3) et puisse passer à travers la cartouche (11),
**caractérisé en ce que**
le système de voie est pourvu de moyens de chauffage et/ou de refroidissement (73) de sorte que le liquide sortant du dispositif d'alimentation d'échantillon (41) ou du dispositif d'alimentation de solvant (40) s'écoule successivement à travers les moyens de chauffage et/ou de refroidissement (73) et l'au moins un support de cartouche (3).

9. Instrument d'extraction en phase solide selon la revendication 8, comprenant un système de commande, **caractérisé en ce que** le système de commande est équipé de manière à pouvoir commander les moyens de chauffage et/ou de refroidissement;

10. Instrument d'extraction en phase solide selon la revendication 8 ou 9, **caractérisé en ce que** le système de voie est pourvu d'un raccord de gaz et de moyens de vanne afin de raccorder le raccord de gaz aux moyens de chauffage et/ou de refroidissement (73) et l'au moins un support de cartouche (3) de telle manière que le gaz sortant du raccord de gaz s'écoule successivement à travers les moyens de chauffage et/ou de refroidissement (73) et l'au moins un support de cartouche (3).
